# EUROPEAN PATENT APPLICATION

(11) **EP 1 548 738 A1**
(43) Date of publication of application: **29.06.2005**
(21) Application number: 03741555.1
(22) Date of filing: 23.07.2003
(51) Int. Cl.: G11B 23/40, G11B 23/30

(54) **DISC CARTRIDGE**

(30) Priority: 30.07.2002 JP 2002221000
(71) Applicant: MATSUSHITA ELECTRIC INDUSTRIAL CO., LTD., Kadoma-shi, Osaka 571-8501 (JP)
(72) Inventor: SAJI, Yoshito, Ashiya-shi, Hyogo 659-0043 (JP); TAKIZAWA, Teruyuki, Neyagawa-shi, Osaka 572-0019 (JP); KANESHIRO, Tetsuya, Hirakata-shi, Osaka 573-0071 (JP)
(74) Representative: Grünecker, Kinkeldey, Stockmair & Schwanhäusser Anwaltssozietät
(86) International application number: PCT/JP2003/009359
(87) International publication number: WO 2004/012193

(57) **Abstract**

A disc cartridge stores a disc that has a first side with a first functional portion and a second side. The disc cartridge includes: a cartridge body including a disc storage portion, a chucking opening and a head opening, where the disc storage portion has a disc window and a bottom and stores the disc therein so that the first side thereof is exposed through the disc window; the chucking opening is provided on the bottom of the disc storage portion so as to get the disc chucked externally; and the head opening is also provided on the bottom of the disc storage portion so as to allow a head, which reads and/or writes data from/on the second side of the disc, to access the second side; a shutter, supported to, and movable with respect to, the cartridge body so as to expose or cover at least the head opening; and a second functional portion, which is provided for the cartridge body and which produces an audiovisual effect by cooperating with the first functional portion of the disc.

## Description

### TECHNICAL FIELD

The present invention relates to a disk such as an optical disc or a magnetic disk and a disc cartridge to store the disk therein. The present invention also relates to a disc drive for reading and writing data from/on the disk.

### BACKGROUND ART

Recently, as information technologies have been developed remarkably, the storage densities of various types of disk-shaped data storage media, including optical discs and magnetic disks, have been increased significantly. Meanwhile, a broader and broader variety of data can now be stored on such a data storage medium. Thus, not just computer data and software but also music, video and numerous other types of data are now storable on such storage media.

Such a data storage medium is normally provided as a circular disc with a data recording side and a label side. Examples of such discs include CDs and DVDs. On the other hand, another type of data storage medium, including a circular disc with single or double data recording sides and a disc cartridge that covers the disc entirely to store it, is also used extensively. Examples of such data storage media include MDs, DVD-RAMs and MOs.

The data stored on each of these data storage media is not perceivable to human beings in themselves. Thus, in conventional data storage media, information representing the data (or contents) stored thereon is provided as printing on the label side of a disc or on a predetermined area of a disc cartridge. For example, as for a data storage medium on which music or movie data is stored, the titles of the musical tunes or that of the movie is typically shown there. If the given data storage medium allows the user to write data thereon, then the user notes down some information describing the contents of the stored data either on the label side or on the predetermined area of its disc cartridge.

If such a data storage medium with some data stored thereon needs to be sold as a product, then that information printed on the label side of the disc or on the disc cartridge plays a key role in making the product attractive enough for buyers. This is because the buyers cannot see what type of data is contained there just by looking at the data storage medium itself.

In the conventional data storage media, however, that area on which information describing the contents is printed has limited sizes, and methods of providing such information on that area are limited, too. For example, the printable area on the label side of the disc or on the disc cartridge has a predetermined shape. Accordingly, no novel or highly visualized printing is allowed to be provided on that area for designers. Also, in a CD, for example, a data storage layer is located at a depth of 0.1 mm as measured from the surface of the label side. Thus, the designer is never allowed to provide any 3D printing or etching having some level differences on the label side.

Furthermore, as for a data storage medium in which a disc is stored in a disc cartridge, once the disc that has been stored in the disc cartridge is exchanged for another one, the information printed on the disc cartridge might be different from the data actually stored on the disc. In that case, the information that is printed or described on the disc cartridge would become meaningless.

### DISCLOSURE OF INVENTION

In order to overcome the problems described above, an object of the present invention is to provide a disc and a disc cartridge that can achieve novel audiovisual effects in presenting information about the contents stored thereon. Another object of the present invention is to provide a disc drive for such a disc or disc cartridge.

A disc cartridge according to the present invention stores a disc that has a first side with a first functional portion and a second side. The disc cartridge includes a cartridge body, a shutter and a second functional portion. The cartridge body includes a disc storage portion, a chucking opening and a head opening. The disc storage portion has a disc window and a bottom and stores the disc therein so that the first side thereof is exposed through the disc window. The chucking opening is provided on the bottom of the disc storage portion so as to get the disc chucked externally. The head opening is also provided on the bottom of the disc storage portion so as to allow a head, which reads and/or writes data from/on the second side of the disc, to access the second side of the disc. The shutter is supported to, and movable with respect to, the cartridge body so as to expose or cover at least the head opening. The second functional portion is provided for the cartridge body and produces an audiovisual effect by cooperating with the first functional portion of the disc.

In one preferred embodiment, the first and second functional portions produce a visual effect by cooperating with each other.

In another preferred embodiment, the first and second functional portions produce an audio effect by cooperating with each other.

In another preferred embodiment, audiovisual information is stored on the second side of the disc, and the audiovisual effect is associated with the audiovisual information on the second side of the disc.

In another preferred embodiment, the first functional portion is a first design provided on the first side, the second functional portion is a second design provided on a portion of the upper surface of the cartridge body near the disc window, and the first and second designs are combined together to make up a third design that looks like a single continuous design.

In another preferred embodiment, the first design is a picture drawn on the first side and the second design is a picture drawn on the upper surface.

In another preferred embodiment, the first and second designs are planar.

In another preferred embodiment, the first and second designs are embossed.

In another preferred embodiment, the depth of the first embossed design is substantially equal to that of the second embossed design.

In another preferred embodiment, the first side of the disc and the upper surface of the cartridge body are textured.

In another preferred embodiment, the first and second designs are holograms.

In another preferred embodiment, the first functional portion is a tablet that is provided on the first side to allow the user to draw or erase any traces thereon or therefrom, and the second functional portion is an erasing portion that is provided for the cartridge body and is used for erasing the traces that have been drawn on the tablet.

In another preferred embodiment, the tablet includes a magnetic body so as to allow the user to draw the traces by bringing a magnet or another magnetic body close to the surface of the tablet.

In another preferred embodiment, the tablet includes a plurality of small rooms, each being filled with a viscous fluid and a magnetic powder.

In another preferred embodiment, the erasing portion is a magnet plate that is provided on the bottom of the disc storage portion of the cartridge body.

In another preferred embodiment, the traces that have been drawn on the tablet are erased by rotating the disc within the disc storage portion of the cartridge body.

In another preferred embodiment, the first functional portion is a matrix-addressed display device that is provided on the first side and that includes a liquid crystal, organic EL or inorganic EL material, while the second functional portion is provided for the cartridge body and includes a control section for driving the matrix-addressed display device, a memory for storing image data to be presented on the matrix-addressed display device, and a power supply for supplying power to the matrix-addressed display device.

In another preferred embodiment, the second functional portion further includes a loudspeaker provided for the cartridge body.

In another preferred embodiment, the first functional portion further includes a transparent tablet on the surface of the matrix-addressed display device such that information fed into the tablet is displayed on the matrix-addressed display device.

In another preferred embodiment, the first functional portion is a planar loudspeaker that is provided on the first side, while the second functional portion includes a memory for storing audio information to be reproduced through the planar loudspeaker, a control section for converting the audio information and transmitting a signal to the planar loudspeaker, and a power supply for supplying power to the control section.

In another preferred embodiment, the second functional portion further includes a microphone that is provided for the cartridge body, and the control section converts sound, recorded with the microphone, into the audio information and then stores the information in the memory.

In another preferred embodiment, the disc includes a disc-side terminal, which is connected to the first functional portion and which is provided on the outer periphery of the disc, and the cartridge body includes a body-side terminal which is connected to the second functional portion.

In another preferred embodiment, the disc cartridge further includes a disc holding portion for holding the disc thereon while the shutter is closed, and the disc-side and body-side terminals are contactable with each other while the disc is being held by the disc holding portion.

In another preferred embodiment, the disc-side terminal is a plurality of concentric ringlike conductive regions provided along the outer periphery of the disc.

In another preferred embodiment, the disc has a disc-side mark, the cartridge body has a body-side mark, and when the disc is rotated within the disc storage portion of the cartridge body such that the disc-side and body-side marks are aligned with each other, the disc-side and body-side terminals contact with each other.

In another preferred embodiment, the disc includes a disc-side terminal, which is connected to the first functional portion, provided on the first side and has a conductive surface, while the cartridge body includes a body-side terminal, which is connected to the second functional portion, provided on the upper surface of the cartridge body and has a conductive surface. When the disc-side and body-side terminals are touched with fingers at the same time, the first and second functional portions are electrically connected together.

A disc drive according to the present invention includes: a supporting portion into which the disc cartridge of one of claims 1 to 16 is loadable, a disc having a first side with a first functional portion and a second side being stored in the disc cartridge; a spindle motor for mounting and rotating the disc thereon; a head, which is able to read and/or write data from/on the second side of the disc; a sensor for detecting a rotational angular position of the spindle motor when the disc is mounted on the spindle motor; and a control section for controlling the spindle motor in accordance with a command to eject the disc cartridge such that the spindle motor stops at the rotational angular position when the disc is mounted thereon.

Another disc drive according to the present invention includes: a supporting portion into which the disc cartridge of one of claims 1 to 16 is loadable, a disc having a first side with a first functional portion and a second side being stored in the disc cartridge; a spindle motor for mounting and rotating the disc thereon; a head, which is able to read and/or write data from/on the second side of the disc; a sensor for detecting a mark on the second side of the disc; and a control section for controlling the spindle motor such that the spindle motor stops at a position where the mark of the disc is detected.

A disc according to the present invention includes a data storage layer, a first substrate, and a second substrate. The data storage layer is sandwiched between the first and second substrates. Data is read or written from/on the data storage layer through the second substrate. The first substrate has a thickness of 0.5 mm or more.

In one preferred embodiment, the surface of the first substrate is provided with an embossed design including concave and convex portions.

In another preferred embodiment, the first substrate includes a first layer, of which the surface is provided with the embossed design including the concave and convex portions, and a second layer, which is transparent and covers the surface of the first layer.

In another preferred embodiment, the design is related to the data stored on the data storage layer.

In another preferred embodiment, the concave and convex portions of the design have level differences of 0.2 mm to 1.0 mm.

In another preferred embodiment, the first substrate includes a first layer to support the data storage layer thereon and a second layer, which is provided as a film on the surface of the first layer. A scratch mark can be easily left on, or erased from, the second layer with a coin or a fingernail.

In another preferred embodiment, the second layer is provided in multiple areas on the surface of the first layer. By leaving a scratch mark on a particular portion of the second layer in the process step of testing the disc, property information about its warpage, eccentricity or center of mass is displayed.

In another preferred embodiment, predetermined information is printed on the surface of the first layer and is disclosed by scratching the second layer off.

In another preferred embodiment, the information is a quiz answer, a lottery winning mark or foretold future.

### BRIEF DESCRIPTION OF DRAWINGS

FIG. **1** is a perspective view illustrating an overall configuration for a disc cartridge for use in the present invention.
FIG. **2** is an exploded perspective view illustrating an exploded state of the disc cartridge shown in FIG. **1.**
FIG. **3** is a perspective view illustrating a state of the disc cartridge shown in FIG. **1** in which its shutters are closed with its cartridge upper shell and the disc removed.
FIG. **4** is a perspective view illustrating a state of the disc cartridge shown in FIG. **1** in which its shutters are opened with its cartridge upper shell and the disc removed.
FIG. **5** is a perspective view illustrating a state of the disc cartridge shown in FIG. **1** in which its shutters are closed with the disc removed.
FIG. **6** is a perspective view illustrating a state of the disc cartridge shown in FIG. **1** in which its shutters are opened with the disc removed.
FIG. **7** is a partial cross-sectional view illustrating a cross section of the disc cartridge shown in FIG. **1** that passes the center of the disc.
FIG. **8** is a cross-sectional view illustrating a portion of the shutter of the disc cartridge shown in FIG. **1**.
FIG. **9** is a partial plan view illustrating an operating portion and its surrounding portion of the disc cartridge shown in FIG. **1**.
FIG. **10** is a perspective view illustrating a stopper member of the disc cartridge shown in FIG. **1**.
FIG. **11** is a perspective view illustrating a data storage medium according to a first embodiment of the present invention.
FIG. **12** is a cross-sectional view of the data storage medium shown in FIG. **1** as taken in the thickness direction thereof.
FIGS. **13A** and **13B** schematically illustrate the size of the label plane of a conventional disc and the size of a rectangular displayable area of a data storage medium according to the present invention, respectively.
FIG. **14** schematically shows a configuration for a disc drive for use in the data storage medium shown in FIG. **11.**
FIG. **15** schematically shows a configuration for another disc drive for use in the data storage medium shown in FIG. **11**.
FIG. **16** is a perspective view illustrating a data storage medium according to a second embodiment of the present invention.
FIG. **17** is a cross-sectional view of the data storage medium shown in FIG. 16 as taken in the thickness direction thereof.
FIG. **18** is a perspective view illustrating a data storage medium according to a third embodiment of the present invention.
FIG. **19** is a perspective view illustrating a data storage medium according to a fourth embodiment of the present invention.
FIG. **20** is a perspective view illustrating a data storage medium according to a modified example of the third embodiment of the present invention.
FIG. **21** is a cross-sectional view illustrating a data storage medium according to a fourth embodiment of the present invention.

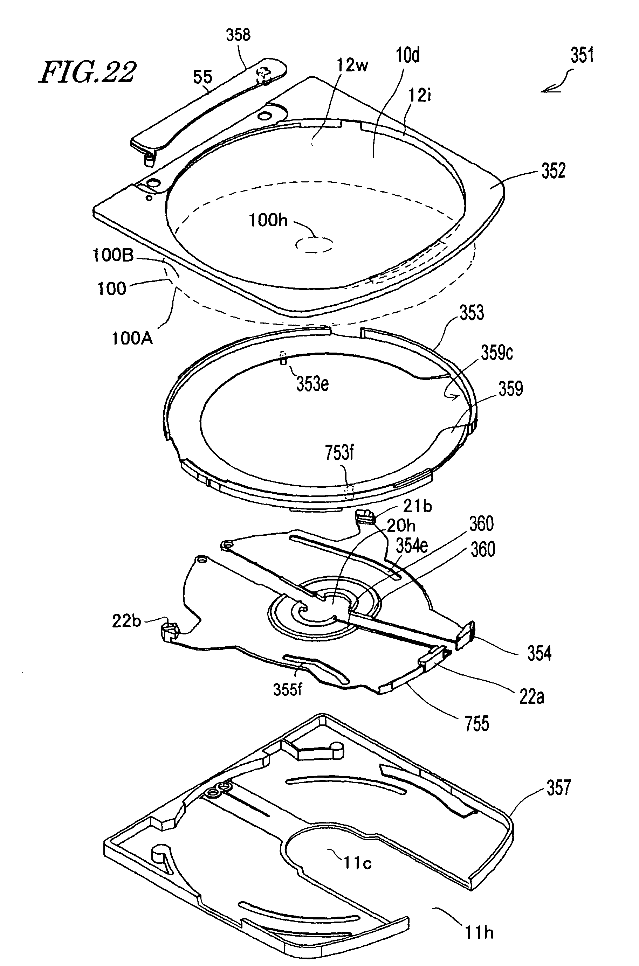

FIG. **22** is a perspective view illustrating an overall configuration for another disc cartridge that can be used in the present invention.

### BEST MODE FOR CARRYING OUT THE INVENTION

First, the common structural features of disc cartridges according to the present invention will be described. The disc cartridge disclosed in PCT International Application Publication No. WO 02/056313 and its corresponding United States Patent Application Ser. No. 10/289,963 or the disc cartridge disclosed in PCT International Application Publication No. WO 03/041076 and its corresponding United States Patent Application (which was filed on June 17, 2003 by an attorney with a docket number 210407.0052/052 US) may be used in any preferred embodiment of the present invention. Thus, the disclosure of PCT International Application Publication No. WO 02/056313, United States Patent Application Ser. No. 10/289,963, PCT International Application Publication No. WO 03/041076 and United States Patent Application (which was filed on June 17, 2003 by an attorney with a docket number 210407.0052/052 US) is hereby incorporated by reference.

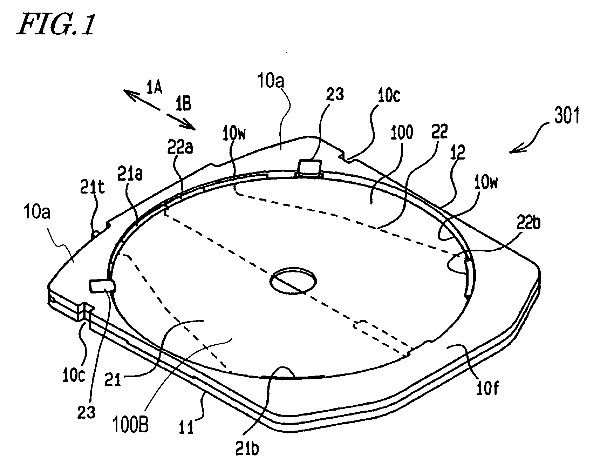

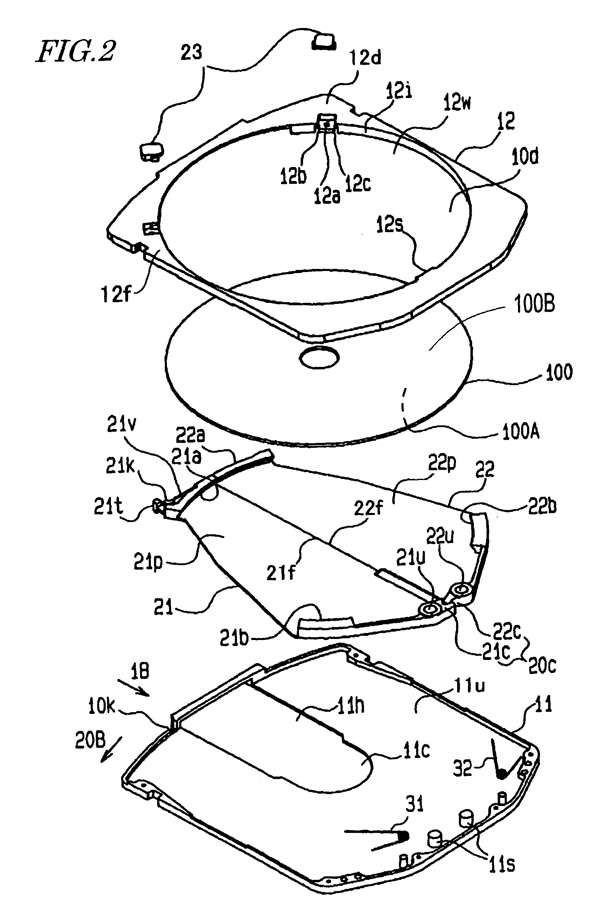

FIGS. **1** and **2** are respectively a perspective view and an exploded perspective view illustrating an exemplary disc cartridge 301 for use in the present invention. First, the structure of the disc cartridge **301** will be outlined with reference to FIGS. **1** and **2.**

The disc **100** shown in FIGS. **1** and **2** includes first and second sides. The first side of the disc, i.e., a label side **100B** on which its label is normally printed, is illustrated in FIG. **1,** while the second side of the disc **100,** i.e., the data recording side **100A,** is illustrated as the back surface in FIG. **2.**

As shown in FIGS. **1** and **2,** the disc cartridge **301** includes a cartridge lower shell **11,** a cartridge upper shell **12,** a pair of shutters **21** and **22** and stopper portions **23.**

As shown in FIG. **2,** the cartridge lower shell **11** includes a chucking opening **11c** and a head opening **11h.** The chucking opening **11c** is provided to allow a chucking member (e.g., a spindle motor for rotating the disc **100)** to enter the disc cartridge **301** externally. The head opening **11h** is provided to allow a head, which reads and/or writes data from/on the data recording side **100A** of the disc **100,** to enter the disc cartridge **301** and access the data recording side **100A.** The cartridge lower shell **11** faces the data recording side **100A** of the disc **100.** Also, the head opening **11h** reaches a side surface of the cartridge lower shell **11.**

The cartridge upper shell **12** includes a circular disc window **12w,** through which the disc **100** can be introduced and removed into/from the disc cartridge **301** and which expands over the entire projection area of the disc **100** to expose the upper surface of the disc. The cartridge upper and lower shells **12** and **11** are adhered or welded together at their outer periphery, thereby forming a cartridge body **10.**

A disc storage portion **10d** for storing the disc **100** therein is defined by a first inner surface **11u** of the cartridge lower shell **11** and a second inner surface **12i** of the cartridge upper shell **12.** The first inner surface **11u** is opposed to the data recording side **100A** of the disc **100,** while the second inner surface **12i** has a substantially cylindrical shape and defines the disc window **12w** inside. That is to say, the first inner surface **11u** becomes the bottom of the disc storage portion **10d.**

In the disc storage portion **10d,** a gap, which is wide enough to allow the disc **100** to rotate freely, is provided between the second inner surface **12i** and the disc **100.** Also, the top of the disc storage portion **10d** is the disc window **12w** so that the disc **100** stored in the disc storage portion **10d** has one side thereof exposed through the disc window **12w.**

The stopper portions **23** are provided in a removable state for the cartridge upper shell **12** so as to partially protrude into the disc window **12w.** In this embodiment, two stopper portions **23** are provided as shown in FIGS. **1** and **2.** On the other hand, another stopper portion **12s** is provided for the cartridge upper shell **12** so as to protrude into the disc window **12w.** The stopper portion **12s** forms an integral part of the cartridge upper shell **12.** The two stopper portions **23** and the stopper portion **12s** are arranged approximately at regular intervals around the circumference of the disc window **12w** for the purpose of preventing the disc **100** from dropping down from the disc window **12w** whether the shutters are closed or opened. These stopper portions **23** and **12s** can prevent the dropping particularly effectively when this disc cartridge is vertically loaded into a disc drive and used.

The shutters **21** and **22** are provided between the data recording side **100A** of the disc **100** and the inner surface **11u** of the disc storage portion **10d.** The shutters **21** and **22** include rotation holes **21u** and **22u,** respectively. These rotation holes **21u** and **22u** are engaged in a freely rotatable state with a pair of rotation shafts **11s,** which is located outside of the disc storage portion **10d** of the cartridge body **10** and opposite to the head opening **11h.** Thus, the shutters **21** and **22** rotate on the rotation shafts **11s** so as to expose or cover the chucking and head openings **11c** and **11h.**

A cam **21c** and a follower **22c** are provided near the rotation holes **21u** and **22u** of the shutters **21** and **22,** respectively. The cam **21c** and the follower **22c** have mutually engaging shapes and together make up an interlocking mechanism **20c** for opening and closing the shutters **21** and **22** while interlocking them with each other.

The respective surfaces of the shutters **21** and **22,** which are opposed to the data recording side **100A** of the disc, are covered with protective layers **21p** and **22p** for the purpose of preventing the disc **100** from getting scratched or any dust from entering the data recording side **100A** thereof.

The protective layers **21p** and **22p** may be appropriately selected from the group consisting of an anti-scratching nonwoven fabric, a dustproof nonwoven fabric, an anti-scratching coating layer and a dustproof coating layer. In this embodiment, sheets of a dustproof nonwoven fabric are adhered or ultrasonic welded as the protective layers **21p** and **22p.**

Shutter springs **31** and **32** are provided outside of the disc storage portion **10d** for the shutters **21** and **22,** respectively. These springs **31** and **32** apply an elastic force to the shutters **21** and **22** in such a direction as to close the shutters **21** and **22.** Optionally, the elastic force may also be applied from any other type of elastic members to the shutters **21** and **22** in that closing direction.

As shown in FIG. **2,** the disc cartridge **301** includes disc holding portions **21a, 21b, 22a** and **22b** at both ends of the shutters **21** and **22.** Each of these disc holding portions **21a, 21b, 22a** and **22b** has a downwardly tapered slope at the end of the shutter **21** or **22** to grip the outer edge of the disc **100** while the shutters **21** and **22** are closed. The structure and operation of the disc holding portions **21a, 21b, 22a** and **22b** will be described in further detail later.

As shown in FIG. **1,** the upper surface **10f** of the cartridge body **10** (or the cartridge upper shell **12**) is parallel to the disc **100** to be stored. In addition, two concave portions **10c** are further provided on two of the side surfaces of the cartridge body **10.** These concave portions **10c** may be used as either pull-in notches or positioning recesses when the disc cartridge **301** is loaded into a disc drive or when the cartridge **301** is stored in a changer.

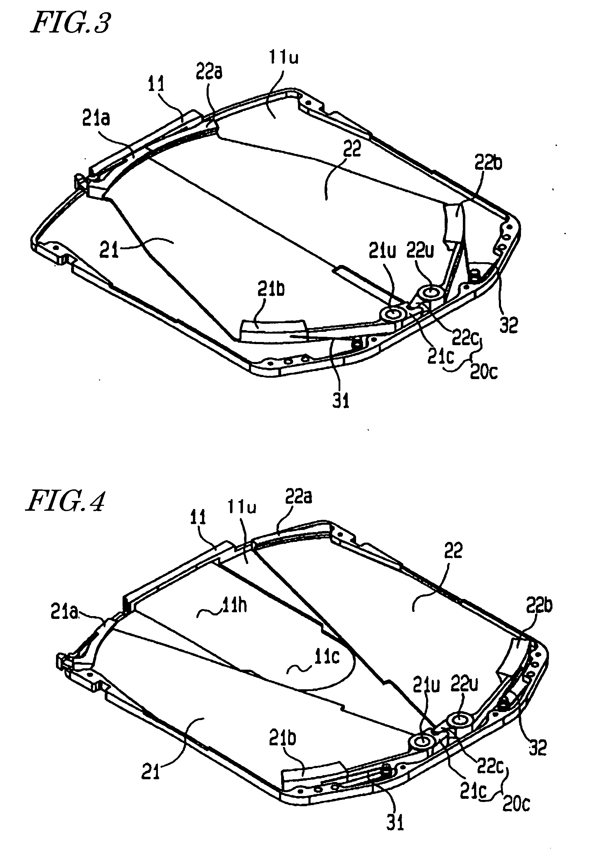

FIG. **3** is a perspective view illustrating a state where the shutters **21** and **22** cover the chucking and head openings **11c** and **11h** with the cartridge upper shell **12** and the disc **100** removed. In FIG. **3,** the disc holding portions **21a, 21b, 22a** and **22b** of the shutters **21** and **22** are located at such positions as to grip the outer edge of the disc **100** (not shown).

FIG. **4** is a perspective view illustrating a state where the shutters **21** and **22** expose the chucking and head openings **11c** and **11h** with the cartridge upper shell **12** and the disc **100** removed. As a result of the rotation of the shutters **21** and **22** on their rotation holes **21u** and **22u,** respectively, the chucking and head openings **11c** and **11h** are now exposed. Also, as the shutters **21** and **22** have rotated, the disc holding portions **21a, 21b, 22a** and **22b** have also rotated on the rotation holes **21u** and **22u.** Consequently, the disc holding portions **21a, 21b, 22a** and **22b** are now separated from the outer edge of the disc **100** (not shown).

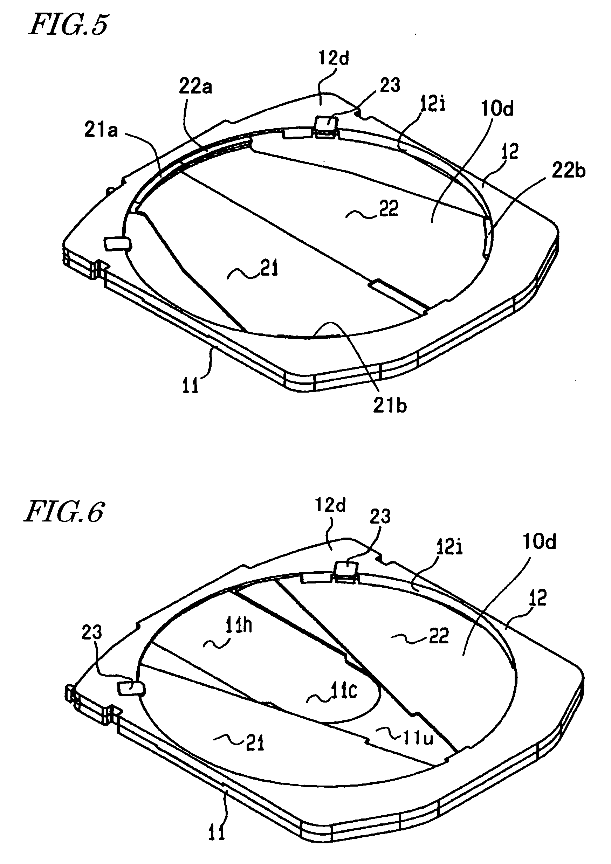

FIG. **5** is a perspective view illustrating a state where the shutters **21** and **22** cover the chucking and head openings **11c** and **11h** with the disc **100** removed. As shown in FIG. **5,** the disc holding portions **21a, 21b, 22a** and **22b** protrude into the disc storage portion **10d** to hold the disc **100** (not shown) thereon. On the other hand, FIG. **6** is a perspective view illustrating a state where the shutters **21** and **22** expose the chucking and head openings **11c** and **11h** with the disc **100** removed. As shown in FIG. **6,** while the shutters **21** and **22** are opened, the disc holding portions **21a, 21b, 22a** and **22b** are stored outside of the disc storage portion **10d** of the cartridge body.

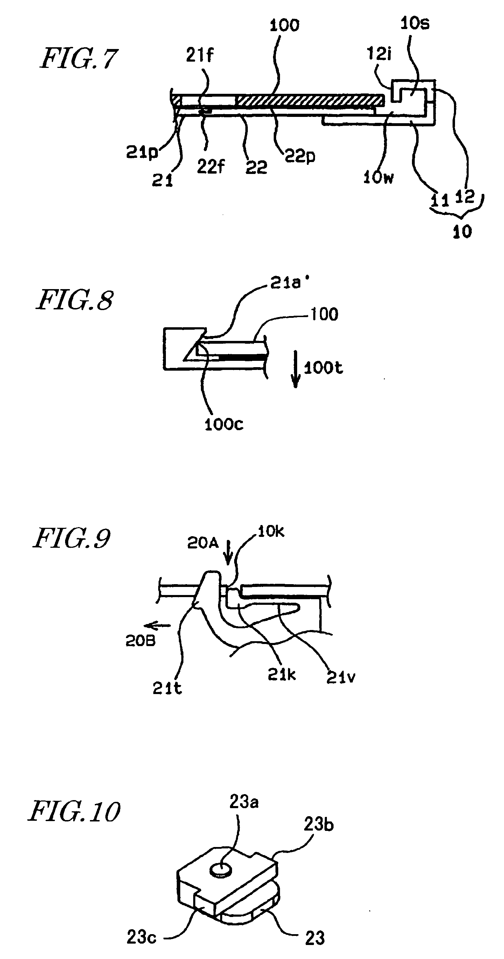

Next, the structure and the operation of the shutters **21** and **22** will be described in further detail with reference to FIGS. **7, 8** and **9.** FIG. **7** is a cross-sectional view as viewed along a plane that passes the center of the disc **100** stored in the disc cartridge **301.** As shown in FIG. **7,** the second inner surface **12i** of the disc storage portion **10d** of the cartridge body **10** is provided with a notch **10w** so as not to interfere with the opening and closing operations of the shutter **22** or **21.** Also, the cartridge body **10** further includes a shutter storage portion **10s** for storing a portion of the shutter **22** or **21** being opened. Furthermore, at least the edge portions **21f** and **22f** of the shutters **21** and **22,** which are butted against each other over the head and chucking openings **11h** and **11c** while the shutters are closed, overlap with each other in the thickness direction of the disc **100** as shown in FIG. **7.**

On the other hand, as shown in FIG. **8,** each of the disc holding portions **21a, 21b, 22a** and **22b** includes a slope **21a', 21b', 22a'** or **22b',** which overhangs a portion of the projection area of the disc and overlaps with the outer edge of the disc **100**. That is to say, the slope **21a'** has a downwardly tapered shape and leans toward the disc **100.** While the chucking and head openings **11c** and **11h** are covered with the shutters **21** and **22,** the slope **21a'** is allowed to contact with the outer edge **100c** of the disc **100,** thereby gripping the disc **100** thereon and pressing the disc **100** in the thickness direction **100t.** In this manner, the data recording side **100A** is brought into plane contact with the sheets **21p** and **22p** of the shutters **21** and **22** and the disc **100** is held and fixed onto the cartridge body **10.** In such a state, the data recording side **100A** of the disc **100** is in close contact with the sheets **21p** and **22p.** Thus, no dust will be deposited on the data recording side **100A.**

Also, if the exposed side of the disc **100** is rotated manually or if the shutters **21** and **22** are opened or closed intentionally, then dust, finger marks or any other dirt that has adhered onto the data recording side **100A** of the disc **100** may be wiped away.

Furthermore, as shown in FIG. **9,** the shutter **21** includes a shutter opening/closing portion **21t,** an elastic portion **21v** and a locking protrusion portion **21k.** These portions **21t, 21v** and **21k** form integral parts of the shutter **21.** Specifically, the shutter opening/closing portion **21t** is used to open and close the shutters externally. The locking protrusion portion **21k** is connected to the shutter **21** by way of the elastic portion **21v.** While the shutter **21** covers the chucking and head openings **11c** and **11h,** the locking protrusion portion **21k,** to which an elastic force is being applied from the elastic portion **21v,** engages with a locking hole **10k** of the cartridge body **10,** thereby preventing the shutter **21** from rotating and fixing and supporting the shutter **21** to the cartridge body **10** as shown in FIG. **9.** Once the shutter **21** is fixed, the other shutter **22,** which is interlocked with the shutter **21** via the interlocking mechanism **20c,** is also fixed.

Accordingly, only by getting the locking protrusion portion **21k** pressed externally by a protrusion, for example, in the direction indicated by the arrow **20A** and disengaged from the locking hole **10k** while pressing the opening/closing portion **21t** in the direction indicated by the arrow 20B at the same time, the shutters **21** and **22** can be rotated to expose the chucking and head openings **11c** and **11h** and the disc **100** can be released from the disc holding portions **21a, 21b, 22a** and **22b.** Thus, it is possible to prevent the operator from removing the disc accidentally.

Next, the structure and operation of the stopper portions **23** will be described in further detail with reference to FIGS. **2** and **10.** FIG. **10** is a perspective view illustrating the removable stopper portion **23** upside down. The convex portions **23a, 23b** and **23c** of the stopper portion **23** are respectively engaged with concave portions **12a, 12b** and **12c** provided for the cartridge upper shell **12** near the disc window **12w** thereof as shown in FIG. **2.** Thus, the stopper portion **23** can be removed from the cartridge upper shell **12.**

As described above, the disc cartridge for use in the present invention includes the disc storage portion that stores a disc therein with its label side fully exposed. On the bottom of the disc storage portion, the head opening for allowing a read/write head to access the data recording side of the disc, and the chucking opening for allowing a motor to access the disc and rotate it are provided. Unless this disc cartridge is loaded into a disc drive for reading or writing purposes, the head and chucking openings are always covered with the shutters. Also, the disc is gripped by the disc holding portions so as not to move within the disc storage portion. The stopper portion protrudes into the disc window and can prevent the disc from dropping through the disc window no matter whether the shutters are opened or closed.

### EMBODIMENT 1

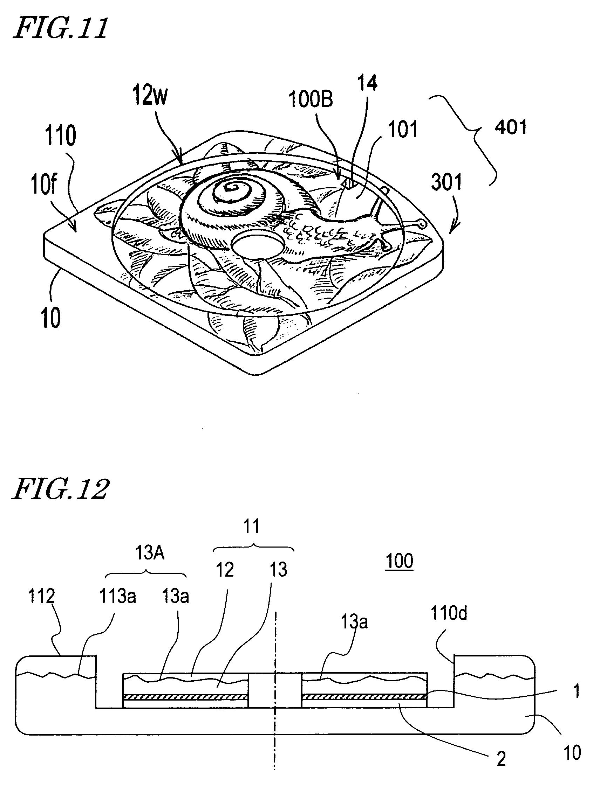

Hereinafter, a first embodiment of the present invention will be described. FIG. **11** is a perspective view illustrating a data storage medium **401** including a disc **101** and a disc cartridge 301 to store the disc **101** therein. FIG. **12** shows a cross section of the data storage medium **401** as taken in the thickness direction thereof.

The disc cartridge **301** has the same structure as the disc cartridge **301** that has already been described with reference to FIGS. **1** through **10.** The disc cartridge **301** stores the disc **101** therein such that the label side **100B** of the disc **101** is fully exposed through the disc window **12w** of the disc cartridge **301.** Although not shown in FIG. **11,** the disc holding portions **21a, 22b, 22a** and **22b** provided for the shutters **21** and **22** of the disc cartridge **301** hold the disc **101** thereon while the data storage medium **401** is not yet inserted into a disc drive for reading and writing purposes as described above.

As shown in FIG. **2,** the disc **101** includes a data storage layer **1,** a first substrate **11** and a second substrate **2.** The data storage layer **1** is sandwiched between the first and second substrates **11** and **2**. The second substrate **2** has a data recording side **100A.** On the other hand, the first substrate **11** has a label side **100B.**

The first substrate **11** includes a first layer **13,** of which the surface is provided with an embossed design **13a** including concave and convex portions, and a second layer **12,** which is transparent and covers the surface of the first layer **13.** The second layer **12** fills the unevenness of the design **13a** and has a flat surface. The concave and convex portions of the design **13a** have level differences of 0.2 mm to 1 mm. The first substrate **11** overall preferably has a thickness of at least 0.5 mm and more preferably has a thickness of 0.8 mm to 1.4 mm. The design **13a** is the first functional portion provided for the label side **100B.**

The upper surface **10f** with the disc window **12w** of the cartridge body **10** of the disc cartridge **301** is provided with an embossed design **113a** including concave and convex portions. The surface of the design **113a** is covered with a transparent portion **112.** The design **113a** is the second functional portion provided for the disc cartridge **301.** The cartridge body **10** and the first substrate **11** of the disc **101** may be formed by molding polycarbonate, ABS resin or any other suitable material.

The design **13a** as the first functional portion and the design **113a** as the second functional portion are combined together to make up a design **13A** that looks like a single continuous design. In other words, the designs **13a** and **113a** cooperate with each other, thereby producing a visual effect. In the example illustrated in FIG. **11,** the designs **113a** and **13a** together make up a picture **13A** of a snail creeping on a leaf. The designs **113a** and **13a** and the unified design **13A** may be a picture, photo or pattern related to the music or video stored on the data storage layer **1** beforehand. To unify the combined designs **113a** and **13a** even more perfectly, the substrate **11** and the cartridge body may be made of the same material. Also, to increase the degree of unification and the visual effect, the embossed patterns of the designs **13a** and **113a** preferably have the same depth.

By providing such continuous designs **113a** and **13a** in this manner, the design **13A,** greater than the label side **100B** of the disc **100,** can be presented on the surface of the disc cartridge 301 with the disc window **12w.**

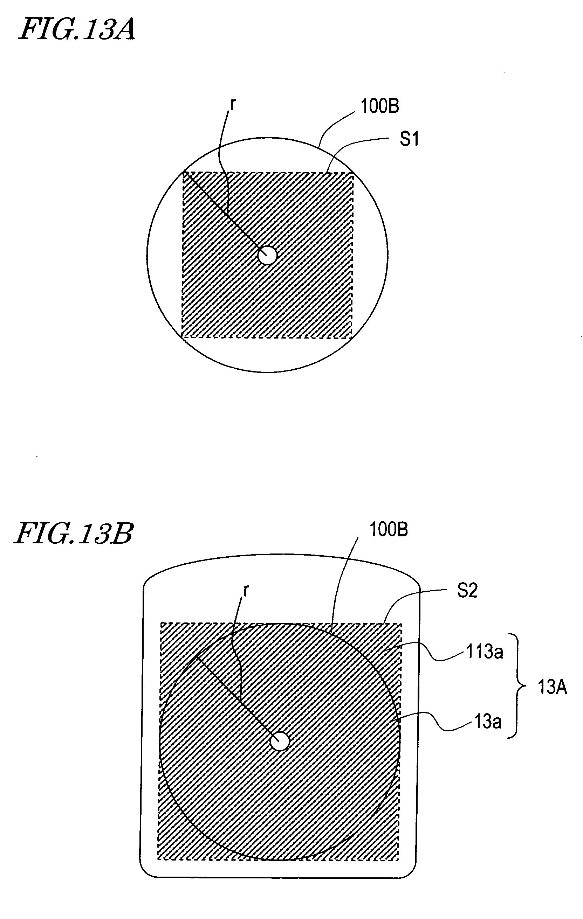

In particular, if only the label side 100B is provided with a design, the design must be confined within the circular border of the disc. In contrast, according to this preferred embodiment, the design **13A** may have its shape defined by the configuration of the disc cartridge **301.** For example, in providing a design that is defined by a substantially rectangular configuration, the largest possible design that can be provided on the label side **100B** will be a square that is circumscribed by a circle defined by the label side **100B** as shown in FIG. **13A.** In that case, supposing the radius of the label side **100B** is r, each side of the square **S1** has a length of √2r.

On the other hand, if the design can also be provided on the upper surface of the disc cartridge **301,** then the configuration of the smallest design may be defined by a square **S2** that is inscribed by the circular label side **100B** as shown in FIG. **13B.** That is to say, the design can be provided within the square **S2,** each side of which has a length of 2r. Thus, the area of the square **S2** is twice greater than that of the square **S1.** As a result, a greater visual effect is achievable.

In addition, by presenting the unified design **13A** over the disc cartridge **301** and disc **100** that are not a single member but two separate members, a high visual effect is achieved.

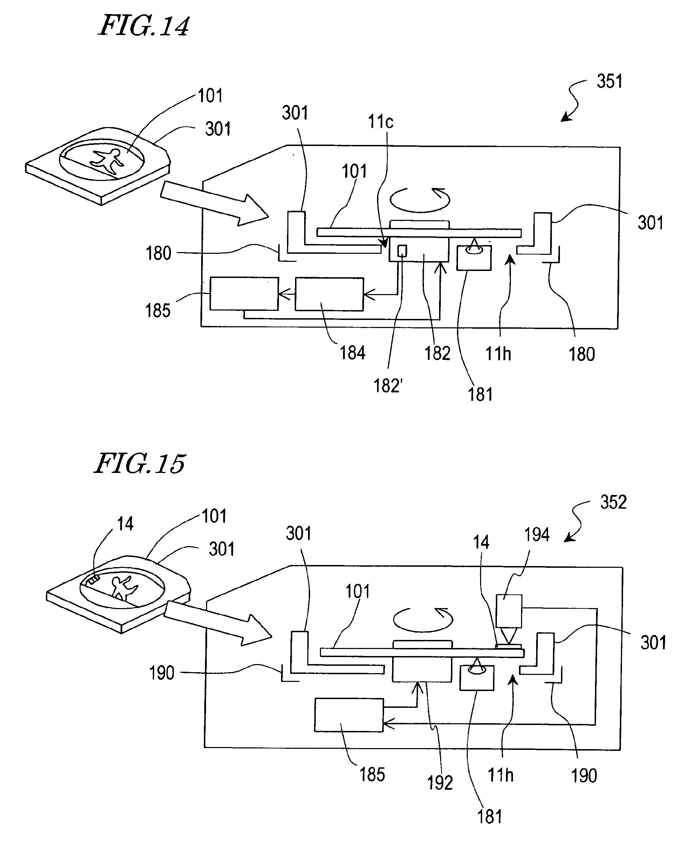

To achieve such a visual effect, the disc **101** is preferably held by the disc cartridge **301** such that the designs **113a** and **13a** make up one continuous design **13A.** For that purpose, reading and/or writing from/on the disc **101** in the disc cartridge **301** is preferably carried out with the disc drive 351 shown in FIG. **14.**

The disc drive **351** includes: a supporting portion **180** into which the disc cartridge **301** is loadable; a spindle motor **182** for mounting and rotating the disc **101** stored in the disc cartridge **301;** and an optical head **181,** which can read and/or write data from/on the data storage layer of the disc **101.** The spindle motor **182** is provided with a sensor **182'** for detecting the rotational angle of the spindle motor **182.** The disc drive 351 further includes a rotational angle detector **184** for calculating the rotational angle based on the output of the sensor **182'** and a control section **185** for controlling the rotational angle of the spindle motor **182** in accordance with the angle detector **184.** Although not shown in FIG. **14,** the disc drive **351** further includes other components that are included in any conventional disc drive.

As already described with reference to FIGS. **1** through **10,** when the disc cartridge **301** is loaded into the disc drive **351,** the shutters **21** and **22** of the disc cartridge **301** are opened so that the optical head **181** can access the data recording side **100A** of the disc **101** through the head opening **11h**. At the same time, the disc **101** is mounted on the spindle motor **182** through the chucking opening **11c**.

In the meantime, as the shutters **21** and **22** are opened, the disc holding portions **21a, 22b, 22a** and **22b** provided for the shutters **21** and **22** release the disc **101.** Also, the rotational angle of the spindle motor **182** when the disc **101** is mounted on the spindle motor **182** is detected by the angle detector **184.**

When the optical head **181** finishes its read and/or write operation, the control section **185** stops the spindle motor at the rotational angular position that has been detected by the angle detector **184.** Subsequently, as the shutters **21** and **22** are closed, the disc holding portions **21a, 22b, 22a** and **22b** provided for the shutters **21** and **22** hold and fix the disc **101** thereon. As a result, the disc **101** is fixed onto the disc cartridge **301** such that the design **13a** provided on the label side of the disc **101** continues with the design **113a** provided on the upper surface of the cartridge. Thereafter, the disc cartridge **301** is ejected from the disc drive **351.**

In this manner, if this disc drive **402** is used, the rotational angular position of the disc **101** with respect to the disc cartridge **301** before the disc cartridge **301** is inserted into the disc drive **402** is the same as its position after the disc cartridge **301** has been ejected from the disc drive **402.** Thus, the disc **101** is held by the disc cartridge **301** such that the design **13a** provided on the label side of the disc **101** always looks continued with the design **113a** provided on the upper surface of the cartridge body. As a result, the disc cartridge can look even more beautiful and a higher visual effect is achieved.

Alternatively, the disc drive **352** shown in FIG. **15** may also be used to read and/or write data from/on the disc **101** stored in the disc cartridge **301.** If this disc drive **352** is used, an angle mark **14** is made in advance on the label side **100B** of the disc **101.**

The disc drive **352** includes: a supporting portion **190** into which the disc cartridge **301** is loaded; a spindle motor **192** for mounting and rotating the disc **101** stored in the disc cartridge **301;** and an optical head **181,** which can read and/or write data from/on the data storage layer of the disc **101.** The disc drive **352** further includes an angle detector **194** for detecting the angle mark **14** on the label side **100B** of the disc **101** and a control section **185.** Although not shown in FIG. **15,** the disc drive **352** further includes other components that are included in any conventional disc drive.

After the optical head **181** has finished its read and/or write operation, the control section **185** starts the operation of stopping the spindle motor **192.** When the rotational velocity of the spindle motor **192** becomes lower than a predetermined velocity, the control section **185** stops the spindle motor **192** completely at the rotational angular position at which the angle detector **184** has detected the angle mark **14.** As a result, the disc **101** can always be stopped at the same rotational angular position no matter where the rotational angular position of the disc **101** is when the disc cartridge **301** is loaded into the disc drive **352.**

Accordingly, if the location of the angle mark **14** is determined such that the design **13a** provided on the label side of the disc **101** and the design **113a** provided on the upper surface of the cartridge body make up a single continuous design **13A** at this rotational angular position, then the design **13a** provided on the label side of the disc **101** and the design **113a** provided on the upper surface of the cartridge always form a single continuous design **13A** in the disc cartridge **301** ejected from the disc drive **352.** Thus, the disc **101** is held by the disc cartridge **301** such that the design **13a** provided on the label side of the disc **101** always looks continued with the design **113a** provided on the upper surface of the cartridge. As a result, the disc cartridge can look even more beautiful and a higher visual effect is achieved.

It should be noted that the design **113a** does not have to be provided at just one location with respect to the design **13a,** which looks like a single continuous one by combining together the designs **13a** and **113a** on the label side of the disc **101** and on the upper surface of the cartridge, respectively. For example, the designs **13a** and **113a** may be arranged so as to look unified at two locations where the rotational angles of the disc **101** with respect to the disc cartridge **301** are 0 degrees and 180 degrees, respectively. Alternatively, the designs **13a** and **113a** may make up unified designs **13A** at an even larger number of locations. Optionally, the designs **13a** and **113a** may also be arranged so as to look unified irrespective of the rotational angle at which the disc **101** stops with respect to the disc cartridge **301.** In that case, the combined design can always look unified and produce the desired visual effect without using the disc drive **351** or **352.**

In the preferred embodiment described above, the designs **13a** and **113a** provided on the label side **100B** of the disc **101** and on the upper surface of the cartridge are embossed patterns with concave and convex portions. Alternatively, the designs **13a** and **113a** may also be provided as normal flat printings or textured ones. Even if the designs **13a** and **113a** are planar ones, the intended effects are also achievable by making the two designs cooperate with each other as described above. In that case, the first substrate **11** of the disc **101** may have an overall thickness of 0.5 mm or less, and the disc **101** may be CD, for example. As another alternative, each of the designs **113a** and **13a** may also be a hologram that includes a pattern consisting of many fine grooves engraved on the surface of the label side **100B** and multiple transparent plates and drawing pattern layers that are stacked under that pattern.

In the preferred embodiment described above, the surfaces of the designs **13a** and **113a** are covered with the transparent second substrate **12** and the transparent portion **112,** respectively. However, the second transparent substrate **12** and the transparent portion **112** may be omitted. In that case, the concave and convex portions of the designs **13a** and **113a** will be exposed on the label side **100B** of the disc **101** and on the upper surface **10f** of the disc cartridge **301,** respectively. As a result, a tactual effect is also achieved.

In the preferred embodiments described above, the first functional portion of the disc and the second functional portion of the disc cartridge cooperate with each other, thereby achieving an audiovisual effect. However, if a nonplanar first functional portion can be provided for the disc by setting the thickness of the first substrate **11** equal to or greater than 0.5 mm, then the disc itself, including the first functional portion, can achieve a novel and excellent audiovisual effect. More specifically, if a design with the embossed structure as described above is provided as the second functional portion on the label side of the disc, then excellent visual effects, which could not be produced by any conventional disc, are achievable by the stereoscopic design. Accordingly, even without making the first functional portion cooperate with the second functional portion, a disc with a lot of attraction for buyers can be obtained.

In another exemplary disc of which the first functional portion can achieve excellent visual effects by itself, the first layer **13** of the first substrate **11** may be made of a material that functions as a carrier for supporting the data storage layer **1** thereon, while the second layer **12** thereof may be made of a film on which a scratch mark can be easily left with a coin or a fingernail. Various types of information may be provided for a disc **101** with such a structure.

For example, if a disc **101** is manufactured so as to have such a structure, the result of a warpage, eccentricity or center of mass test on the disc **101** may be left as a scratch mark on the second layer **12.** In that case, the location of warpage, eccentricity or center of mass may be represented by the location of the scratch mark. Also, the degree of warpage or eccentricity may also be represented by the size or the number of such scratch marks.

As another alternative, various types of character information, for example, may be printed on the surface of the first layer **13** and may be coated with the second layer **12.** In that case, by scratching the second layer **12** off with a coin or a fingernail, the character information can be disclosed. As the character information, a quiz answer, a lottery winning mark or foretold future (or fortune) may be printed.

### EMBODIMENT 2

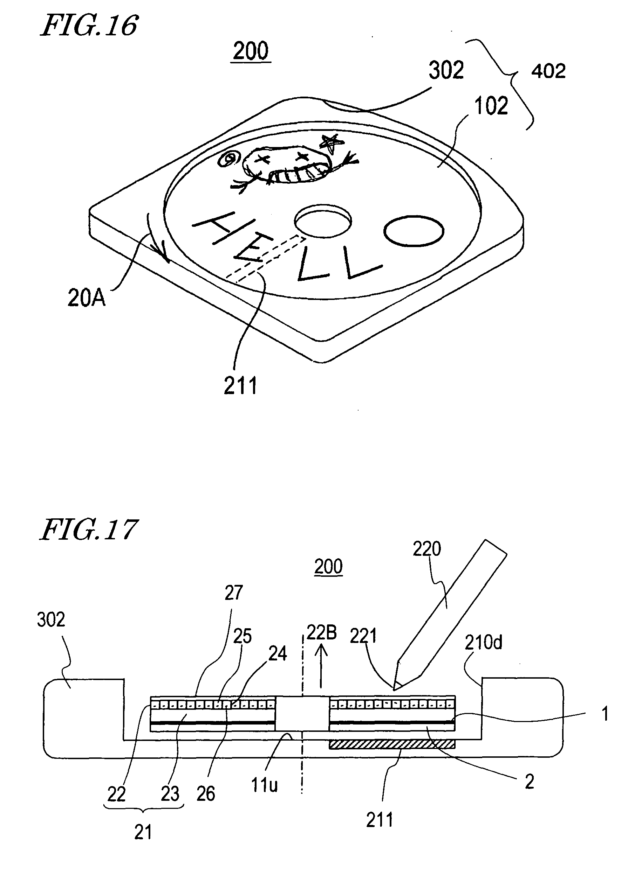

Hereinafter, a disc cartridge according to a second embodiment of the present invention will be described. FIG. **16** is a perspective view illustrating a data storage medium **402** including a disc **102** and a disc cartridge **302** to store the disc **102** therein. FIG. **17** shows a cross section of the data storage medium **402** as taken in the thickness direction thereof.

The disc cartridge **302** has the same structure as the disc cartridge **301** that has already been described with reference to FIGS. **1** through **10.** The disc cartridge **302** stores the disc **102** therein such that the label side **100B** of the disc **102** is fully exposed through the disc window **12w** of the disc cartridge **311.**

As shown in FIG. **17,** the disc **102** includes a data storage layer **1,** a first substrate **21** and a second substrate **2.** The data storage layer **1** is sandwiched between the first and second substrates **21** and **2.** The second substrate **2** has a data recording side **100A.** On the other hand, the first substrate **21** has a label side **100B.**

The first substrate **21** includes a substrate layer **23,** which functions as a carrier for supporting the data storage layer **1** thereon, and a tablet **22,** which is provided on the surface of the substrate layer **23** and on/from which traces representing characters, pictures and so on can be drawn and erased. The tablet **22** includes a group of small rooms **24,** each of which has a viscous fluid **25** and a magnetic powder **26** and which are arranged like a honeycomb, for example, and a transparent sheet **27** that covers the upper surface of the small rooms **24**. The tablet **22** functions as the first functional portion.

As shown in FIG. **17,** a magnet plate **211,** which is at least as long as the radial length of the tablet **22,** is provided on the bottom **11u** of the disc storage portion of the disc cartridge **302** so as to face the data recording side **100A** of the disc **102.** The magnet plate **211** does not have to have its surface exposed on the bottom **11u** but may be embedded under the bottom **11u.** The magnet **211** functions as the second functional portion and erases the pictures, characters and so on that have been drawn on the tablet **22.**

In the disc cartridge **302** that stores the disc **102** therein, the tablet **22** as the first functional portion and the magnet **211** as the second functional portion cooperate with each other so as to function as an erasable tablet. More specifically, when the user brings a touch pen **220,** including a magnet **221** at its tip, into contact with the surface of the tablet **22,** the magnetic powder **26** in the small rooms **24** is attracted toward the surface of the tablet **22.** As a result, the small rooms **24** including the attracted magnetic powder **26** turn into black (or the color of the colored magnetic powder). Accordingly, as the touch pen **220** moves, its traces are displayed in black. In this manner, the user can draw characters, graphics and so on with the touch pen **220.**

As shown in FIG. **16,** if the disc **102** stored in the disc cartridge **302** is forced to make one rotation in the direction indicated by the arrow **20A,** then the magnet plate **211** separates the magnetic powder **26** away from the surface of the tablet **22.** As a result, the characters, graphics and so on that have been displayed on the tablet **22** are erased.

On the other hand, if the disc cartridge **302** including the disc **102** is loaded into a disc drive so as to start reading and/or writing therefrom/thereon, then the disc **102** will be lifted in the direction indicated by the arrow **22B** shown in FIG. **17** so as to be mounted on the spindle motor while being separated from the bottom **11u** of the disc storage portion. Thus, the magnetic force of the magnet plate **211** acting on the magnetic powder **26** is not strong enough to separate the magnetic powder **26** from the surface of the tablet **22.** As a result, even if the disc **102** is rotated by the spindle motor, the characters, graphics, etc. on the tablet **22** are kept as they are.

Thus, according to this preferred embodiment, information about the contents of the disc **102** (e.g., information about the musical tunes or video stored on the disc **102)** can be directly written down on the label side **100B** (i.e., the surface) of the disc **102,** and the information once written may be erased if necessary. The information writable area covers almost all of the label side **100B** and is sufficiently wide. Accordingly, excellent audiovisual effects are achieved by the tablet **22** and magnet plate **211.** In the prior art, such information is noted down on a small piece of sticker and then the sticker is put onto a disc cartridge. As compared with such a method, it is much easier to write down information or erase or rewrite the information once written.

In the preferred embodiment described above, the tablet **22** is designed so as to allow the user to write down characters, graphics and so on there freely. Alternatively, a transparent coordinate input sheet may be provided on the surface of the tablet **22** such that character or graphic data may be input as coordinate data.

### EMBODIMENT 3

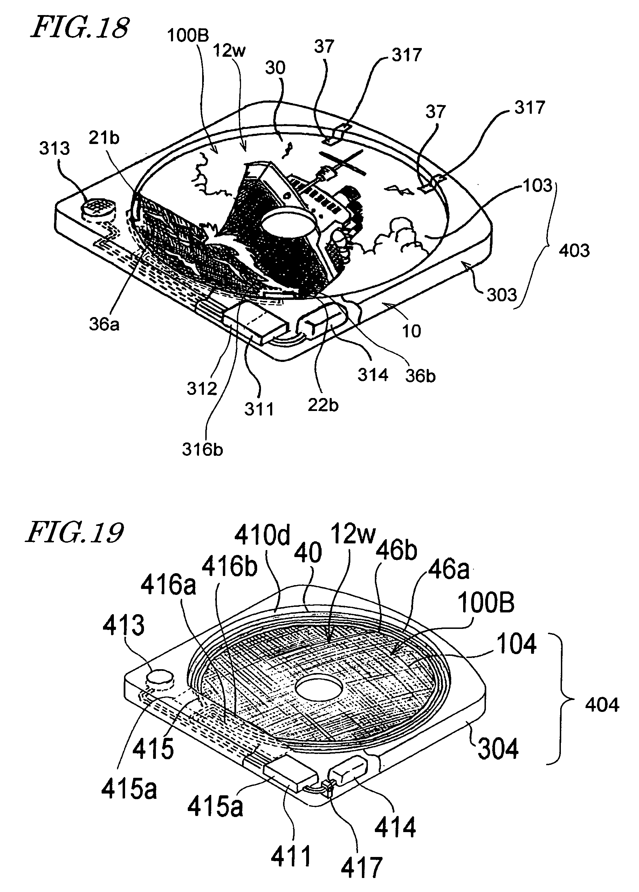

Hereinafter, a disc cartridge according to a third embodiment of the present invention will be described. FIG. **18** is a perspective view illustrating a data storage medium **403** including a disc **103** and a disc cartridge **303** to store the disc **103** therein.

The disc cartridge **303** has the same structure as the disc cartridge 301 that has already been described with reference to FIGS. **1** through **10.** The disc cartridge **303** stores the disc **103** therein such that the label side **100B** of the disc 103 is fully exposed through the disc window **12w** of the disc cartridge **303.**

As shown in FIG. **18,** the disc **103** includes a display device **30** as the first substrate on its label side **100B.** The display device **30** is preferably a matrix-addressed display device, which includes an organic EL, inorganic EL or liquid crystal material. The display device **30** functions as the first functional portion.

The disc cartridge **303** includes a loudspeaker **313,** a control section **311** for controlling the display on the display device **30,** a memory **312** on which image information to be presented on the display device **30** and audio information to be reproduced through the loudspeaker **313** is stored, and a power supply **314** for supplying power to these components. These components are all stored in the cartridge body **10** and function as the second functional portion. The image information and audio information may be related to the contents of the disc **103** (e.g., musical tunes or video stored on the disc **103).** Optionally, the memory **312** may also be removable discrete memory which is attachable to, and removable from, the cartridge body **10.**

As shown in FIG. **18,** body-side terminals **316a** and **316b** connected to the control section **311** are provided on the slopes of the disc holding portions **21b** and **22b** of the shutters **21** and **22,** respectively. On the label side **100B** of the disc **103,** disc-side terminals **36a** and **36b** are provided so as to face the body-side terminals **316a** and **316b,** respectively.

Furthermore, the cartridge body **10** is provided with a pair of body-side marks **317** and the disc **103** is provided with a pair of disc-side marks **37.** When the disc **103** is located at such a rotational angular position that the body-side terminals **316a** and **316b** contact with the disc-side terminals **36a** and **36b,** respectively, the disc-side marks **37** are aligned with the body-side marks **317.**

While the disc cartridge **303** storing the disc **103** therein is not loaded in a disc drive, the disc **103** is held by the disc holding portions. In this case, if the body-side marks **317** are aligned with the disc-side marks **37** by rotating the disc **103,** then the body-side terminals **316a** and **316b** contact with the disc-side terminals **36a** and **36b,** respectively. As a result, in accordance with the data stored in the memory **312,** an image is presented on the display device **30** and sound is reproduced through the loudspeaker **313.** Also, if the body-side marks **317** are shifted from the disc-side marks **37** by rotating the disc **103,** then the display of the image and the reproduction of the sound can be stopped.

In getting read and/or write operations started by loading the disc cartridge **303** including the disc **103** into a disc drive, as the shutters **21** and **22** are going to be opened, the disc holding portions gradually release the disc **103.** As a result, the disc holding portions **21b** and **22b** retract so as not to contact with the disc **103.** Accordingly, even if the disc **103** rotates, the body-side terminals **316a** and **316b** will not contact with the disc-side terminals **36a** and **36b.**

In this manner, according to this embodiment, by using the display device provided on the label side of the disc and the power supply, control section and loudspeaker, which are provided for the disc cartridge to present an image on the display device, a moving picture, for example, can be presented on the display section and sound can be reproduced through the loudspeaker. That is to say, the disc cartridge 303 including the disc **103** can be a more attractive product by increasing the audiovisual effects of the disc cartridge **303.** Particularly when the image to be displayed is related to a movie, for example, stored on the disc **103,** the contents of the disc **103** can be presented even more effectively.

### EMBODIMENT 4

Hereinafter, a disc cartridge according to a fourth embodiment of the present invention will be described. FIG. **19** is a perspective view illustrating a data storage medium **404** including a disc **104** and a disc cartridge **304** to store the disc **104** therein.

The disc cartridge **304** has the same structure as the disc cartridge **301** that has already been described with reference to FIGS. **1** through **10.** The disc cartridge **304** stores the disc **104** therein such that the label side **100B** of the disc **104** is fully exposed through the disc window **12w** of the disc cartridge **304.**

As shown in FIG. **19,** the disc **104** includes a planar loudspeaker **40** as the first substrate on its label side **100B.** The planar loudspeaker **40** functions as the first functional portion.

The disc cartridge **304** includes a microphone **413,** a control section **411** for converting audio information and driving the planar loudspeaker **40,** a memory **412** in which the audio information is stored, a power supply **414** for supplying power to these components, and a switch **417** for electrically connecting the power supply **414** to the control section **411.** The switch **417** can also switch a mode in which sound is recorded with the microphone **413** into a mode in which the audio information stored in the memory **412** is reproduced, or vice versa. These components are stored in the cartridge body **10** and function as the second functional portion. The audio information may be related to the contents of the disc **103** (e.g., musical tunes or video stored on the disc **103).**

The disc cartridge **304** further includes a stopper portion **415,** which protrudes into the disc window **12w.** On the inside surface of the stopper portion **415,** body-side terminals **416a** and **416b,** connected to the control section **411,** are provided so as to face the disc **104.**

On the other hand, two disc-side terminals **46a** and **46b**, which are two concentric ringlike conductive regions, are provided around the outer periphery of the planar loudspeaker **40** on the label side **100B** of the disc **104.** While the disc **104** is being stored in the disc cartridge **304,** the body-side terminals **416a** and **416b** contact with the disc-side terminals **46a** and **46b,** respectively. Each of the disc-side terminals **46a** and **46b** may be divided into a plurality of arcs with a gap, which is shorter than the length of the body-side terminals **416a** and **416b** as measured in the tangential direction of the disc, provided between them.

The stopper portion **415** of this preferred embodiment is supported so as to be rotatable around the fulcrum **415a** and elastic force is applied from a torsion spring, for example, to the stopper portion **415** toward the disc **104.** Accordingly, while the shutters (not shown) are closed and the disc is held by the disc holding portions, the body-side terminals **416a** and **416b** contact with the disc-side terminals **46a** and **46b,** respectively. On the other hand, when the shutters are opened, the stopper portion **415** is raised by the convex portions of the shutters against the elastic force applied. As a result, the body-side terminals **416a** and **416b** separate themselves from the disc-side terminals **46a** and **46b.**

The planar loudspeaker **40** as the first functional portion cooperates with the second functional portion to achieve audiovisual effects. Specifically, if the user turns the switch **417** while the disc cartridge **304** including the disc **104** is not loaded in a disc drive, the disc cartridge **303** enters a recording mode. In the recording mode, sound can be recorded with the microphone **413.** The recorded sound is converted by the control section **411** into audio information, which is then stored in the memory **412.** On the other hand, if the disc cartridge **304** is made to enter a reproducing mode by turning the switch **417,** then the audio information stored in the memory **412** is converted by the control section **411** into an audio signal, which is then reproduced through the loudspeaker. The audio information to be reproduced may either have been recorded with the disc cartridge **304** or be related to the contents of the disc **103** (e.g., musical tunes or video stored on the data storage layer of the disc **103).**

The disc-side terminals **46a** and **46b** of the disc **104** are provided as rings on the label side **100B** of the disc **104.** Accordingly, no matter at what rotational angular position the disc **104** is stored in the disc cartridge **304,** the body-side terminals **416a** and **416b** can always contact with the disc-side terminals **46a** and **46b** and sound is always ready to be reproduced or recorded.

On the other hand, when the disc cartridge **303** including the disc **104** is loaded into a disc drive, the shutters of the disc cartridge **303** are opened and the disc holding portions release the disc **104.** At this time, the stopper portion **415** is lifted and the body-side terminals **416a** and **416b** separate themselves from the disc-side terminals **46a** and **46b.** Accordingly, while read and/or write operation is being carried out on the disc **104,** the rotation of the disc **104** is not interfered with by the contact of the body-side terminals **416a** and **416b** with the disc-side terminals **46a** and **46b.**

In this manner, according to this preferred embodiment, sound can be reproduced through the planar loudspeaker on the label side of the disc by using the loudspeaker and the memory (in which audio information is stored) and the control section in the disc cartridge. That is to say, the disc cartridge **304** including the disc **104** can be a more attractive product by increasing the audiovisual effects of the disc cartridge **304.** In particular, if sound that is related to the musical tunes or movie on the disc **103** is stored in the memory, then a part of the contents can be listened to even without using a disc drive. As a result, the contents of the disc **104** can be presented even more effectively and attractively enough for customers.

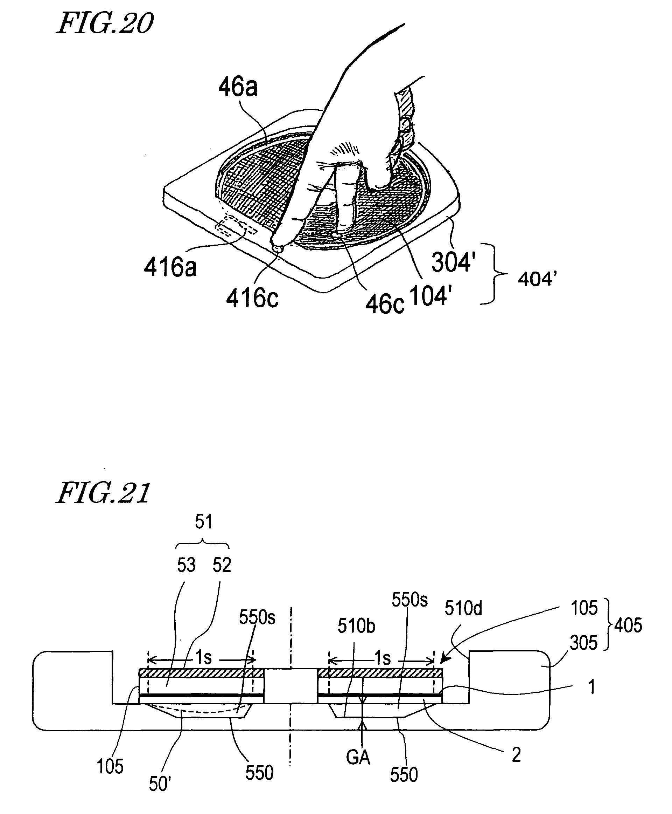

In the preferred embodiment described above, the sound reproduction is controlled by using the switch. However, the switch may be replaced with any other means. For example, a data storage medium **404** including a disc **104'** and a disc cartridge **304'** such as that shown in FIG. **20** includes a disc-side terminal **46c** with an electrically conductive land-like surface on the label side **100B** of the disc **104'** in place of the ringlike disc-side terminal **46b** and a body-side terminal **416c** with an electrically conductive land-like surface on the upper surface of the cartridge body in place of the body-side terminal **416b**, respectively. To reproduce the audio information that is stored in the memory **414,** the user touches the disc-side and body-side terminals **46c** and **416c** with his or her fingers at the same time. Then, current flows between these terminals and the sound can be reproduced. By using such a structure, the switch can be omitted.

### EMBODIMENT 5

Hereinafter, a disc cartridge according to a fifth embodiment of the present invention will be described. FIG. **21** is a cross-sectional view illustrating a data storage medium **405** including a disc **105** and a disc cartridge **305** to store the disc **105** therein.

The disc cartridge **305** has the same structure as the disc cartridge **301** that has already been described with reference to FIGS. **1** through **10.** The disc cartridge **305** stores the disc **105** therein such that the label side **100B** of the disc **105** is fully exposed through the disc window **12w** of the disc cartridge **305.**

As shown in FIG. **21,** the disc **105** includes a data storage layer **1,** a first substrate **51** and a second substrate **2**. The data storage layer **1** is sandwiched between the first and second substrates **51** and **2**. The second substrate **2** serves as the data recording side **100A,** while the first substrate **51** serves as the label side **100B.**

The first substrate **51** includes a substrate layer **53** functioning as a carrier to support the data storage layer **1** thereon and a pressure-sensitive layer **52** provided on the surface of the substrate layer **53.** When pressure is applied onto the surface of the pressure-sensitive layer **52** (i.e., onto the label side **100B),** the pressure-sensitive layer **52** changes its color. Optionally, a pressure-sensitive layer **52,** of which the color density changes with the pressure, may be used. The pressure-sensitive layer **52** serves as the first functional portion. The pressure-sensitive layer **52** does not have to cover the substrate layer **53** entirely but may be divided into multiple regions that are arranged at regular intervals, for example.

On the other hand, the disc cartridge **305** has a recess **550** on the bottom of the disc storage portion such that a space **550S** is present under the data recording area **1S** of the data recording side **100A** when the disc **105** is stored in the disc cartridge **305.** The recess **550** may be provided for the shutters **21** and **22** of the disc cartridge **301** that has already been described with reference to FIGS. **1** through **10.** The recess **550** has a depth GA and serves as the second functional portion.

When the user presses the disc **105** on the label side 100B thereof, the disc **105** is flexed. As shown in FIG. **21,** if the amount of flexure reaches approximately 80% of GA, for example, as indicated by the dashed curve **50',** then the pressure-sensitive layer changes its color to show an alert that the disc **105** might get scratched due to contact of the data recording side **100A** with the bottom of the recess **550.**

In the preferred embodiments described above, the disc cartridges have the structure shown in FIGS. **1** through **10** in common. However, the disc cartridge may also have any other structure as long as the disc cartridge can store a disc therein with the label side thereof exposed. For example, according to the present invention, the structure of the disc cartridge 351 shown in FIG. 21 may be adopted. As shown in FIG. **21,** the disc cartridge **351** includes a cartridge upper shell **352,** a cartridge lower shell **357,** a rotational member 353, shutters **354** and **355,** and a stopper portion **358.** The cartridge upper and lower shells 352 and 357 include a disc storage portion **10d** with a disc window **12w** just like the disc cartridge 301.

The shutters 354 and 355 are provided on the bottom of the disc storage portion **10d** so as to expose or cover the head opening **11h**.

The rotational member **353** is held over the shutters **354** and **355** in the disc storage portion **10d,** and includes protrusions **353e** and **353f.** Also, the shutters **354** and **355** are provided with grooves **354e** and **355f** that engage with the protrusions **353e** and **353f**, respectively. Accordingly, by rotating the rotational member **353,** the shutters **354** and **355** can be opened and closed.

The rotational member **353** includes a disc receiving portion **359,** which contacts with the outer periphery of the data side **100A** of the disc **100** and receives the data **100** thereon when the shutters **354** and **355** are closed, and a notch **359c,** which is provided for the disc receiving portion so as to be located inside of the head opening when the shutters are opened.

The disc storage portion **10d** includes a sidewall **12i** around the outer periphery of the bottom. The disc holding portions **21b, 22a** and **22b** of the shutters **354** and **355** hold the disc **100** thereon with the center of the disc **100** offset from that of the disc storage portion **10d** such that the outer side surface of the disc **100** contacts with the sidewall **12i** of the disc storage portion **10d** in the region where the notch **359c** of the rotational member **353** is present while the shutters are closed. Also, while the disc **100** is being held by the disc holding portions **21b, 22a** and **22b**, the outer periphery of the data recording side **100A** of the disc contacts with the disc receiving portion **359.**

The shutters **354** and **355** are provided with a hole **20h** corresponding to the center hole of the disc **100.** Also, protrusions are provided so as to surround the hole **20h.** While the shutters are closed and the disc **100** is held by the disc holding portions **21b, 22a** and **22b**, the data recording side of the disc **100** contacts with the disc receiving portion **359** and the protrusions **360.** Also, as described above, where the disc receiving portion **359** is not present, the disc contacts with the sidewall **12i**. Accordingly, a closed space is formed under the data recording area of the disc **100.** By providing this space, no dust will be deposited on the data recording area and the data recording area will not get scratched due to contact with the disc cartridge.

### INDUSTRIAL APPLICABILITY

According to the present invention, a disc and a disc cartridge, which achieve novel and excellent audiovisual effects that have never been accomplished by any conventional disc or disc cartridge and which are very attractive for buyers, are realized. In addition, a disc drive is also provided for such a disc or disc cartridge.

## Claims

1. A disc cartridge for storing a disc that has a first side with a first functional portion and a second side, the disc cartridge comprising:
a cartridge body including a disc storage portion, a chucking opening and a head opening, wherein the disc storage portion has a disc window and a bottom and stores the disc therein so that the first side thereof is exposed through the disc window; the chucking opening is provided on the bottom of the disc storage portion so as to get the disc chucked externally; and the head opening is also provided on the bottom of the disc storage portion so as to allow a head, which reads and/or writes data from/on the second side of the disc, to access the second side of the disc;
a shutter, which is supported to, and movable with respect to, the cartridge body so as to expose or cover at least the head opening; and
a second functional portion, which is provided for the cartridge body and which produces an audiovisual effect by cooperating with the first functional portion of the disc.

2. The disc cartridge of claim 1, wherein the first and second functional portions produce a visual effect by cooperating with each other.

3. The disc cartridge of claim 1, wherein the first and second functional portions produce an audio effect by cooperating with each other.

4. The disc cartridge of claim 1, wherein audiovisual information is stored on the second side of the disc, and the audiovisual effect is associated with the audiovisual information on the second side of the disc.

5. The disc cartridge of claim 2, wherein the first functional portion is a first design provided on the first side, the second functional portion is a second design provided on a portion of the upper surface of the cartridge body near the disc window, and the first and second designs are combined together to make up a third design that looks like a single continuous design.

6. The disc cartridge of claim 5, wherein the first design is a picture drawn on the first side and the second design is a picture drawn on the upper surface.

7. The disc cartridge of claim 6, wherein the first and second designs are planar.

8. The disc cartridge of claim 6, wherein the first and second designs are embossed.

9. The disc cartridge of claim 8, wherein the depth of the first embossed design is substantially equal to that of the second embossed design.

10. The disc cartridge of claim 6, wherein the first side of the disc and the upper surface of the cartridge body are textured.

11. The disc cartridge of claim 6, wherein the first and second designs are holograms.

12. The disc cartridge of claim 2, wherein the first functional portion is a tablet that is provided on the first side to allow the user to draw or erase any traces thereon or therefrom, and the second functional portion is an erasing portion that is provided for the cartridge body and is used for erasing the traces that have been drawn on the tablet.

13. The disc cartridge of claim 12, wherein the tablet includes a magnetic body so as to allow the user to draw the traces by bringing a magnet or another magnetic body close to the surface of the tablet.

14. The disc cartridge of claim 13, wherein the tablet includes a plurality of small rooms, each being filled with a viscous fluid and a magnetic powder.

15. The disc cartridge of claim 14, wherein the erasing portion is a magnet plate that is provided on the bottom of the disc storage portion of the cartridge body.

16. The disc cartridge of claim 15, wherein the traces that have been drawn on the tablet are erased by rotating the disc within the disc storage portion of the cartridge body.

17. The disc cartridge of claim 2 wherein the first functional portion is a matrix-addressed display device that is provided on the first side and that includes a liquid crystal, organic EL or inorganic EL material, and wherein the second functional portion is provided for the cartridge body and includes a control section for driving the matrix-addressed display device, a memory for storing image data to be presented on the matrix-addressed display device, and a power supply for supplying power to the matrix-addressed display device.

18. The disc cartridge of claim 17, wherein the second functional portion further includes a loudspeaker provided for the cartridge body.

19. The disc cartridge of claim 17, wherein the first functional portion further includes a transparent tablet on the surface of the matrix-addressed display device such that information fed into the tablet is displayed on the matrix-addressed display device.

20. The disc cartridge of claim 3, wherein the first functional portion is a planar loudspeaker that is provided on the first side, and wherein the second functional portion includes a memory for storing audio information to be reproduced through the planar loudspeaker, a control section for converting the audio information and transmitting a signal to the planar loudspeaker, and a power supply for supplying power to the control section.

21. The disc cartridge of claim 18, wherein the second functional portion further includes a microphone that is provided for the cartridge body, and wherein the control section converts sound, recorded with the microphone, into the audio information and then stores the information in the memory.

22. The disc cartridge of one of claims 17 to 21, wherein the disc includes a disc-side terminal, which is connected to the first functional portion and which is provided on the outer periphery of the disc, and wherein the cartridge body includes a body-side terminal which is connected to the second functional portion.

23. The disc cartridge of claim 22, wherein the disc cartridge further includes a disc holding portion for holding the disc thereon while the shutter is closed, and wherein the disc-side and body-side terminals are contactable with each other while the disc is being held by the disc holding portion.

24. The disc cartridge of claim 23, wherein the disc-side terminal is a plurality of concentric ringlike conductive regions provided along the outer periphery of the disc.

25. The disc cartridge of claim 23, wherein the disc has a disc-side mark and the cartridge body has a body-side mark, and wherein when the disc is rotated within the disc storage portion of the cartridge body such that the disc-side and body-side marks are aligned with each other, the disc-side and body-side terminals contact with each other.

26. The disc cartridge of one of claims 17 to 21, wherein the disc includes a disc-side terminal, which is connected to the first functional portion, provided on the first side and has a conductive surface, while the cartridge body includes a body-side terminal, which is connected to the second functional portion, provided on the upper surface of the cartridge body and has a conductive surface, and wherein when the disc-side and body-side terminals are touched with fingers at the same time, the first and second functional portions are electrically connected together.

27. A disc drive comprising:
a supporting portion into which the disc cartridge of one of claims 1 to 16 is loadable, a disc having a first side with a first functional portion and a second side being stored in the disc cartridge;
a spindle motor for mounting and rotating the disc thereon;
a head, which is able to read and/or write data from/on the second side of the disc;
a sensor for detecting a rotational angular position of the spindle motor when the disc is mounted on the spindle motor; and
a control section for controlling the spindle motor in accordance with a command to eject the disc cartridge such that the spindle motor stops at the rotational angular position when the disc is mounted thereon.

28. A disc drive comprising:
a supporting portion into which the disc cartridge of one of claims 1 to 16 is loadable, a disc having a first side with a first functional portion and a second side being stored in the disc cartridge;
a spindle motor for mounting and rotating the disc thereon;
a head, which is able to read and/or write data from/on the second side of the disc;
a sensor for detecting a mark on the second side of the disc; and
a control section for controlling the spindle motor such that the spindle motor stops at a position where the mark of the disc is detected.
